# EUROPEAN PATENT SPECIFICATION

(11) **EP 3 607 484 B1**
(45) Date of publication and mention of the grant of the patent: **30.06.2021**
(21) Application number: 18733375.2
(22) Date of filing: 08.05.2018
(51) Int. Cl.: H04L 29/06, G06F 21/55

(54) **MULTILEVEL INTRUSION DETECTION IN AUTOMATION AND CONTROL SYSTEMS**
MEHRSTUFIGE EINDRINGDETEKTION IN AUTOMATIONS- UND STEUERSYSTEMEN
DÉTECTION D'INTRUSION MULTINIVEAU DANS DES SYSTÈMES D'AUTOMATISATION ET DE COMMANDE

(30) Priority: 08.05.2017 US 201762502887 P
(43) Date of publication of application: 12.02.2020
(73) Proprietor: Siemens Mobility GmbH, 81739 München (DE)
(72) Inventor: PI, Jiaxing, Weehawken, New Jersey 07086 (US); PFLEGER DE AGUIAR, Leandro, Robbinsville, New Jersey 08691 (US); WORONKA, Stefan, 38271 Baddeckenstedt (DE); SCHÄFER, Philipp, Plainsboro, New Jersey 08536 (US); RAMARAJ, Ramamani, Monmouth Junction, NJ 08852 (US)
(74) Representative: Horn Kleimann Waitzhofer Patentanwälte PartG mbB
(86) International application number: PCT/US2018/031494
(87) International publication number: WO 2018/208715

(56) References cited:
- EP-A1- 3 079 336
- US-A1- 2011 072 506
- US-A1- 2015 195 250
- DONG WEI ET AL: "Protecting Smart Grid Automation Systems Against Cyberattacks", IEEE TRANSACTIONS ON SMART GRID, IEEE, USA, vol. 2, no. 4, 1 December 2011 (2011-12-01), pages 782-795, XP011380185, ISSN: 1949-3053, DOI: 10.1109/TSG.2011.2159999

## Description

### TECHNICAL FIELD

This application relates to automation and control. More particularly, this application relates to intrusion detection automation and control systems.

### BACKGROUND

Cyber attacks on private computer networks have long been at the forefront of detection and protection efforts using information technology. Now the threat of cyber attacker intrusion to industrial systems, such as automation and control systems that support critical infrastructure, is gaining attention. Due to aspects like vertical integration of the production systems and horizontal integration of the value chain, industrial control system (ICS) networks are often directly or indirectly connected to IT networks (office network) and the Internet, hence offering an opportunity for cyber attackers to penetrate such environments and exploit any existing vulnerabilities. OT (Operations Technology) systems such as programmable logic controllers (PLCs), Distributed Control Systems (DCS), motion controllers, Supervisory Control and Data Acquisition (SCADA) servers, and Human Machine Interfaces (HMIs) offer many additional challenges when it comes to deploying security measures.

Attack methods have evolved over recent years from simple methods performed by curious hackers to advanced persistent threats (APTs) carefully designed by highly motivated top experts, sometimes with extended resources sponsored by nation states. Detecting such targeted attacks and other general attack campaigns require the development of additional detection methods and coverage. Such sophisticated cyber-attacks aimed at OT devices are often intentionally camouflaged under normal network traffic and hidden inside legitimate systems with methods that avoid detection by existing signature based malware detection methods.

Commercial detection tools recently adopted for OT apply a combination of passive intrusion detection and deep-packet-inspection (DPI) of the industrial protocols observed at the application layer (ref. ISO 7491 OSI model). Such methods rely, however, on the assumption that any received traffic corresponds to the actual observed traffic on the network, which might not be true in some cases. As an example, "manipulation of process view" type of attacks may utilize legitimate HMI workstations to display a satisfactory status of the monitored process variables (e.g. temperature, pressure, etc.) to disguise a compromised production environment. The prior art is known from US 2011/072506 A1 and from the document "Protecting Smart Grid Automation Systems Against Cyberattacks" (IEEE TRANSACTIONS ON SMART GRID, vol. 2, no. 4).

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 shows an example of a multilevel intrusion detection system for an OT network according to embodiments of this disclosure;
FIG. 2 shows an example of a PLC with an intrusion detection agent according to embodiments of this disclosure;
FIG. 3 shows an example of data extraction for intrusion detection according to embodiments of this disclosure;
FIG. 4 shows an example of a correlation unit according to embodiments of this disclosure; and
FIG. 5 shows an example of a computing environment within which embodiments of the disclosure may be implemented.

### DETAILED DESCRIPTION

The invention is defined by the appended claims.

Methods and systems are disclosed for multilevel intrusion detection for operations technology (OT) devices in industrial automation systems. The disclosed methods and systems present an improvement to the functionality of the computer used to perform such a computer based task. While currently available tools may detect an anomaly based on deviations of expected values of a sensed measurement at a host or a network signal, there are intrusion types that could evade conventional measures due to the inability to extract and analyze measurements from two or more levels. For example, a correlative analysis of multilevel intrusion detectors according to the embodiments of this disclosure is an innovative approach to detect a cyber attack, such as one that spoofs safe readings at a single control point to deceive controllers in higher control levels of the network (i.e., a loss of process view attack). Data may be collected from multiple software agents placed at different levels of the control network, which may autonomously activate and execute data collection, and in some instances, transform the data from a fieldbus protocol to a communication protocol that is more conducive to correlative analysis. Hence, the embodiments of the present disclosure enable the intrusion detection system to be more robust, efficient, and effective than conventional means.

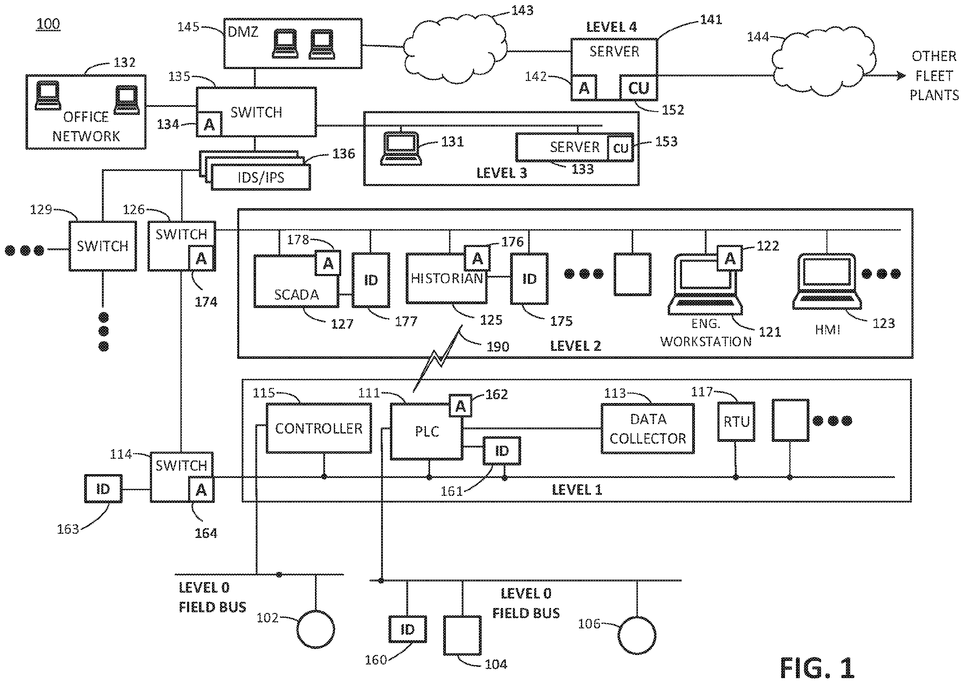

FIG. 1 shows an example of a multilevel intrusion detection system for an OT network according to embodiments of this disclosure. In an embodiment, an OT network 100 may have a plant wide structure that includes multiple control levels, such as a production scheduling control level 4, a production control level 3, a plant supervisory control level 2, a direct control level 1, and a field bus control level 0, as shown in FIG. 1. Each of the control levels may communicate according to an industrial Ethernet protocol, controlled by routers or Ethernet switches at each level. For example, switch 135 is placed within the control network to control data packet routing between control levels 3 and 4.

The control level 4 components of the OT network 100 may include one or more production scheduling servers 141 as the highest level of control for the plant wide OT network 100. The server 141 may be remotely located and connected to the OT network 100 via a network 143 such as the internet, and connected to other fleet plants via network 144. A DMZ 145 may provide a firewall between the plant control network and the external network 143.

The control level 3 components of the OT network 100 may include one or more coordinating computers 131, and one or more web servers or central archiving servers 133. An office network 132 may share a common router 135 with the control level 3 components, and may include one or more user terminals used by plant personnel to perform administrative functions that may be ancillary to plant control. However, by sharing a common path at switch 135, the office network 132 may present a vulnerability to the OT network 100 by way of external communication via network 143, such as the internet. For example, an office worker laptop could be victimized by a cyber attack and infected with malware that could later move laterally to potentially intercept and alter data packets in the OT network 100.

Control level 2 of the OT network 100 may perform a supervisory function for the network. The level 2 components of the OT network 100 may include one or more SCADA servers 127, one or more historian units 125, an engineering workstation 121, and an HMI unit 123. SCADA servers 127 are useful for remote access to level 1 controllers and may serve to provide overriding functionality at a supervisory level. Historian units 125 may be embedded or external devices used for storing historical process data, such as process variable information, event information, and/or user action information, collected by a SCADA server 127 or an HMI unit 123. For example, a historian unit 125 may be implemented as a plant information management system (PIMS) device. Level 2 switches may control data packets for level 2 OT components. For example, switch 126 may control communications to and from each of SCADA servers 127, historians 125, engineering workstations 121, and HMIs 123 when communicating with OT components of other levels. Other level 2 switches, such as switch 128, may be similarly placed within the OT network 100 for controlling other level 2 control components dedicated to different zones of the plant.

Control level 1 of the OT network 100 may include direct controllers responsible for controlling actions of field devices and for collecting sensor and measurement information related to the field devices. Control level 1 may include one or more controllers 115, one or more PLCs 111, and one or more remote telemetry units

(RTUs) 117. Each of the PLCs 111 may be coupled to a data collector 113 for logging and storing historical and production data related to the field devices, such as to database storage. During plant operations, a PLC 111 may perform scan cycles of inputs and outputs, which are stored as process images for access by the SCADA server 127. The outputs may be communicated to the operator at an HMI unit such as HMI unit 123. Such data transmissions between control components at the control levels may be susceptible to a cyber attack, such as a manipulation of process view.

Control level 0 of the OT network 100 may include one or more field buses to which field devices, such as sensors and actuators, are connected. The signals exchanged at the field bus may be referred to as process variables, including received control instructions from the level 0 control devices, and control feedback signals, such as instrument measurements and sensor readings, sent back to the level 0 control devices. For example, field device 102 may be controlled by controller 115, while field devices 104, 106 are controlled by PLC 111. A control level 1 switch 114 may be implemented as an Ethernet router and/or gateway for exchanging data packets at control level 1 to control level 2. For PLCs 111 that are not Ethernet enabled, switch 114 may include a gateway for conversion of PLC data to Ethernet based data to communication with higher control level OT components, such as SCADA server 127. The interface between the controllers, such as PLC 111, and the level 0 field devices may be a serial port protocol, such as Profibus RS-485 standard protocol, which is incompatible with Ethernet. While Ethernet or industrial Ethernet is described as one possible protocol for higher levels of the OT network 100, other data transfer protocols may be applied with conversion and switching as appropriate according to the same manner as described.

In an embodiment, the intrusion detection may include one or more network based implementations, which utilize high level detection tools, such as IDS/PDS units 136. For example, the IDS/PDS units 136 may be configured to read one or more communication protocols, such as Modbus, S7comm, Ethernet/IP, or the like. Network based intrusion detection may track origins and destinations of network data packets and detect anomalies based on signatures or unexpected behavior of network devices. For example, a table of data collection for communication packets between two devices, such as SCADA server 127 and historian 125, may indicate an expected throughput (e.g., 25kbps) during a particular time span (e.g., between 08:00 and 20:00 each day). A network based anomaly may be indicated in response to detection of constraint violations, such as changing direction of data flow or maximum throughput being exceeded. Other examples of network based intrusion detection may include monitoring relevant security alerts relative to performed functions and processing, such as execution of code and other performed events at different control levels.

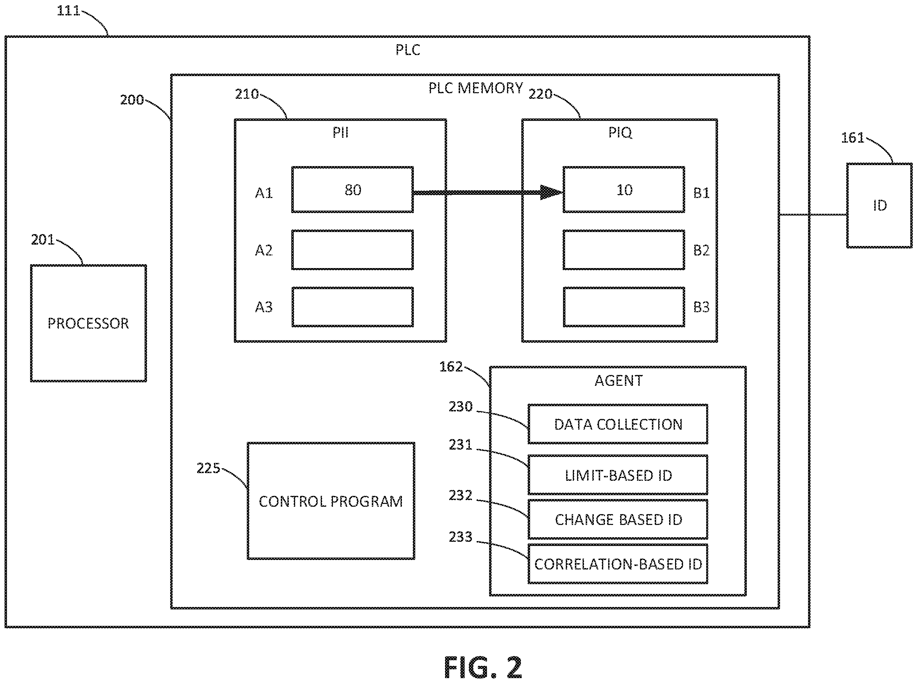

In an embodiment, the intrusion detection may include one or more host based implementations, which utilize placement of a local intrusion detection (ID) unit in a host device or at a network switch. For example, as shown in FIG. 1, an ID unit such as agent 162, may be disposed in a host device, such as the PLC 111. As shown in FIG. 2, agent 162 may include a software function block 230 to implement data collection at the host device, and software function blocks for execution of various types of intrusion detection, including but not limited to limit-based intrusion detection 231, change-based intrusion detection 232, and correlation based intrusion detection 235. In an embodiment, the function blocks of agent 162 may be executed by PLC processor 201. In an embodiment, the agent 162 may be implemented as an embedded computer with a separate microprocessor to execute the function blocks. The host based intrusion detection may be implemented as a separate unit, such as intrusion detection unit 161, connected to the memory of the host device, such as PLC memory 200.

Although the example of FIG. 1 shows the intrusion detection functionality in one PLC 111 to detect potential cyberattacks on itself, it can also be implemented in a way that one PLC can detect potential cyberattacks on its peer PLCs, by collecting data from other PLCs.

The control program 225 includes the instructions executed by the PLC 111 for operation of connected field devices. Additionally, the control program 225 manages input/output, global variables, and access paths. The function blocks 231, 232, 233 are configured to analyze these input/output, global variables, and access paths as they are received or modified to identify conditions which may indicate that a malicious intrusion is taking place.

The limit-based intrusion detection function block 231 may examine and validate measurements collected by sensors according to the limits of physical variables of the production system. A potential cyberattack may be identified when measurements of sensors exceed the limits of physical variables of the production process. For instance, conveyors of a packaging line should run forward in the speed range of 0.25^{~}0.5 m/s when the production line is in a producing state. When the controller receives a reading from the drive of conveyor which indicates the conveyor is running at 0.1 m/s, it could be a cyberattack on the control system or the drive system. As another example during the producing state, the controller may receive a speed setting of 0.75 m/s for the conveyor from an operator via the HMI 123. This anomaly could be indication of a cyberattack on the controller or the HMI. In response to the detected anomaly, an alert indication may be sent to system operators as a potential cyberattack has been detected.

The change-based intrusion detection function block may perform intrusion detection based on the knowledge that some variables in the process environment cannot be changed in a short period of time. For example, a sliding window technique may be employed for intrusion detection in this context, according to an embodiment in which rapid change is detected in a process variable that exceeds a threshold for rate of change. In this example, a wireless temperature sensor measures furnace temperature. Assume that based on the design of a furnace, it is known that the furnace temperature cannot be increased by 100°C within 3 minutes. A data block may be deployed to record the temperature of the furnace temperature reading in the last 3 minutes. If the temperature rises too fast (e.g., 800°C to 850°C in 3 minutes), an alarm can be raised that a possible cyberattack is underway on one or more of the devices associated with the furnace.

The correlation-based intrusion detection function block 233 may perform intrusion detection based on a correlation between process variables. For example, with an industrial oven having multiple heating elements, the temperature in a certain interval in the oven depends on how many heating elements are on. Assume that a wireless sensor is used to collect temperature information of the industrial oven and there are ten heating elements which can be operated individually, where it usually takes 15 minutes to raise the temperature from 20°C to 400°C when all heating elements are on. However, if the controller detects that it took 15 minutes to raise the temperature from 20°C to 400°C when only two heating elements are on, an alarm may be triggered to indicate that a possible cyberattack is underway.

Any of the intrusion detection methods described above, such as the limit-based, change-based, or correlation-based detections, may be applied alone or in combination. Also, a combination of network-based intrusion detection and host-based intrusion detection may be implemented. For example, data collection of network-based detection device, such as an IDS unit 136, and data collection of one or more host-based devices such as ID unit 160, may be monitored continuously, which can be used to correlate network anomalies to input/output (I/O) process anomalies.

In an embodiment, placement of multiple ID units may be deployed at different levels. As shown in FIG. 1, one or more ID units, either as embedded agents or external units, may be placed at each control level, such as agent 142 in control level 4 server 141, agent 134 in switch 135 for control level 3, agents 178, 176, 122 and ID units 175, 177 in control level 2, and agent 162, ID unit 161 in control level 1, and ID unit 160 at control level 0. In an embodiment, an ID unit may be deployed at each control level in at least one control level component or switch for the control level. The device or switch in which the ID unit may be deployed can either be the same type of component, or may be a variety of component types. As one example for a combination of ID units to cover the multiple control levels, the ID units may consist of agent 142 at control level 4 server 141, agents 134, 174, 164 at network switches for control levels 1, 2, 3, and ID unit 160 for control level 0.

An ID unit may be a free standing computer connected to a control level component, or may be an embedded system within a control level component. In an embodiment, an ID unit may be implemented as an industrial personal computer (PC), such as a ruggedized PC, connected to a network switch, such as ID unit 163. The ID unit may include a software application installed on memory within the unit, programmed to execute a local data collection function. For control level 0 devices connected to the field bus via a serial protocol, such as Profibus, standard IT protocol detection is not compatible, and a transformation of the signals is required. For example, the ID unit 160 at control level 0 may therefore include a transformation component (e.g., a gateway) to translate the extracted data to a protocol (e.g., Ethernet) useable by the intrusion detection system for correlation analysis with higher control level data.

In an embodiment, one or more ID units may be configured to perform passive intrusion detection, such as port mirroring. For example, agent 162 may be connected to a port of the PLC 111 which is dedicated as a mirrored port with respect to a port monitored by an operator at HMI 123, or a port connected to data collector 113.

In an embodiment, one or more ID units may be configured to perform active detection. For example, the detection device 112 may periodically scan the memory of the level component, such as the PLC 111. As an example, FIG. 2 shows PLC memory 200, which may include a process image input table (PII) 210, a process image output table (PIQ) 220, a control program 225 and a processor 201. During a scanning cycle for PLC 111, processor 201 may read the status of inputs 210, such as sensor value 80 at address A1, and execute the control program 225 using the status of the inputs. Output values generated by the control program are stored in the output table 220. For example the output value 10 at address B1 is the result of the corresponding input value 80. The processor 201 may then scan the output table, and send the output values to the level 0 field devices. An ID unit, such as ID unit 161 or agent 162, may periodically scan the input table 210 and output table 220 of the PLC memory 200. To conserve system resources, the ID unit active scan may implement a discriminate scan of the input and output tables. For example, the periodicity of the active scan may be determined based on a learning algorithm that optimizes intrusion detection relative to a threshold of excessive data dumping and processor usage of the PLC 111. As another example, the ID units may be programmed to limit the types of information to actively scan from the stored data, which may be identified by the source or the address for example.

In an embodiment, a combination of passive and active intrusion detection implementations may be deployed in the network 100.

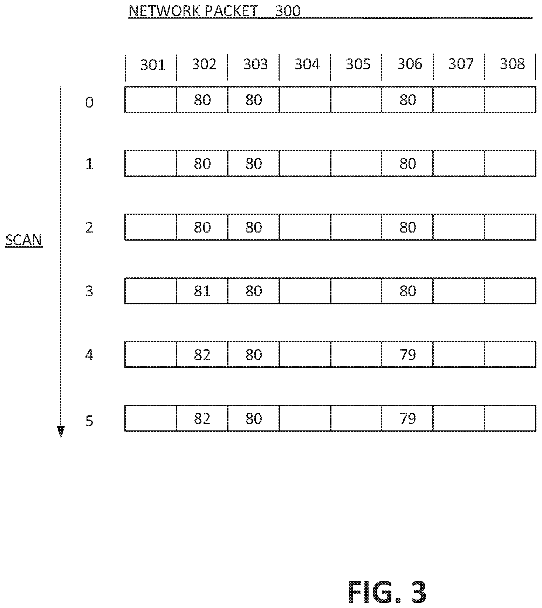

FIG. 3 shows an example of data extraction for intrusion detection according to embodiments of this disclosure. In an embodiment, an ID unit may execute a learning algorithm to determine a data unit of interest from a retrieved network data packet. For example, an ID unit at the control level 2, such as agent 122, may receive a network data packet 300 from the field bus without knowledge of packet addressing. If the network 100 is configured with a single communication protocol, then each ID unit would easily retrieve the data because the addressing would be known. If, however, multiple communication protocols are deployed in the network 100, which is commonly the case for industrial control applications, each ID unit may be programmed with the knowledge of all protocols deployed, and may identify the protocol of the received data packet. As another example, each ID unit may observe network packets over time, where each packet consists of blocks. For simplicity, FIG. 3 shows each data packet having blocks 301-308, when actual data packets may be comprised of many more blocks. Assume that the ID unit 160 expects a value of 80 for a field device of interest. Between scan 0 and scan 2, there are three blocks with value 80, hence more sampling is necessary to ascertain which block corresponds with the field device of interest. The rule based learning algorithm may be programmed, using inference based learning for example, to validate the block location upon observing the expected value for a minimum number of scans, or a minimum number of consecutive scans. For example, consecutive scans 4 and 5 show block 303 having the expected value of 80. In an embodiment, the expected value may be determined by another ID unit, such as ID unit 161, which has observed during a training period that an input table value for the field device of interest typically has a value of 80 during a particular process state or time of day for example.

In an embodiment, network data packets may be encrypted and each ID unit is configured to have access to the encryption key(s) in order to decrypt the data packets.

As the ID units collect data among the multiple control levels in real-time during plant operations, the data may be correlated according to one or more embodiments in order to search for anomalies based on data packet values of corresponding data sources, such as data retrieved at multiple control levels corresponding to a particular field device. For example, a time series data scan may be performed by ID units 160, 161, 177 and agent 134, and a correlation unit may extract the data from each ID unit that corresponds to field device 160, and compare the data values in search for any inconsistency that could be an indication of an anomaly due to a cyber attack. This process may be performed by the correlation unit at each scan for multiple field devices, or other types of corresponding data retrieved by the ID units. The correlation unit may be implemented as an embedded system within any of the control level components.

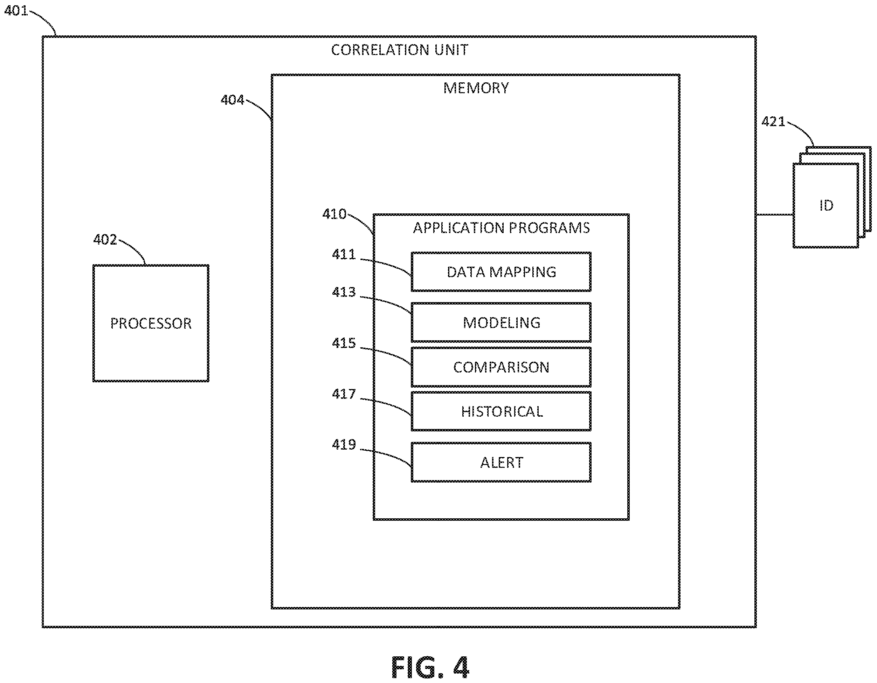

FIG. 4 shows an example of a correlation unit according to embodiments of the present disclosure. In an embodiment, a correlation unit 401 may include a processor 402 and a memory 404 with application programs 410 executable by the processor 402. Each application program may be stored as a module, such as a data mapping module 411, a modeling module 413, a comparison module 415, a historical module 417 and an alert module 419. The data mapping module 411 may perform a mapping of a retrieved data packet to a source of the data to enable comparison of data associated with multiple ID units 421, where the compared data corresponds to a common field device. The modeling module 413 may generate models (e.g., machine learning models) based on historical process variable data, user data, or a combination of both, to establish expected or predicted process behavior against which current real-time data can be compared. The comparison module 415 may perform a comparison of retrieved data of the data mapping module according to corresponding data types. The comparison module 415 may also compare real-time data to one or more models of of generated by the modeling module 413 to detect anomalies. The historical module 417 may execute a timeline (e.g., a time stamped compilation) of anomalies discovered by the correlations, which may be transmitted in a visual format to an operator in raw form (e.g., as a timeline of discrepancies detected), or may be processed by a qualitative or quantitative analysis to determine if an alert threshold has been reached. The alert module 419 may include predetermined thresholds for triggering an alert signal or message in response to one or more anomalies being detected that surpass the thresholds. In response to a triggered alert, the alert module 419 may generate the alert signal or message for display to an operator at a user terminal display device, such as the HMI 123.

In an embodiment, control components of the OT network may be coupled using an open platform communication (OPC) protocol. By monitoring OPC interfaces, such as link 190 between historian unit 125 and PLC 111 (e.g., a wireless protocol as shown in FIG. 1, or a wired protocol) using multiple ID units, a distributed process history can be accumulated, from which one or more correlations can discover anomalies to reveal a potential cyber attack. On advantage of intrusion detection at OPC interfaces for historian units is that cyber attacks typically alter data for presentation at a user access point, such as displayed data at an HMI unit for an operator, but fail to alter the data recorded at a historian unit in a consistent manner.

In an embodiment, a correlation unit may perform a correlation of an anomaly detected by network-based intrusion detection with an anomaly detected during a host-based intrusion detection. For example, the IDS/PDS unit 136 may detect a signature-based anomaly that occurs at the same time as a host-based anomaly detected by agent 162. Such a correlation may be used for adding a level of confidence to a detected anomaly as validation that the anomaly relates to an intrusion detection, such as a cyber attack.

In an embodiment, a central correlation unit may be deployed in a cloud-based implementation, such as a cloud server. For example, a cloud server may be configured to run a product data management service, such as MindSphere, to which the production of network 100 is tied. Accordingly, the production network 100 may utilize the service with the correlation unit extension to additionally incorporate the data retrieved by the multilevel ID units and to perform the correlation at the cloud server. As another example, the control level 4 server 141 may deploy a correlation unit 152 which can be utilized to implement fleet-level intrusion detection by collection of data from ID units deployed at multiple control levels at other plants in a similar manner as shown for OT network 100. Applying a fleet-level intrusion detection analytics may include monitoring and comparing similar process setups or identical equipment running on different plant sites, or for different customers.

In an embodiment, a central correlation unit may be deployed in a plant-level network server located on-premises, such as correlation unit 153 in network server 133. The correlation unit may be implemented as an embedded system with a dedicated processor, or by sharing an existing processor in the network server 133.

In an embodiment, the correlation for the multilevel ID units may be implemented as a distributed network of smart ID units. For example, ID units deployed at multiple levels may each be equipped with communication means, such as a transceiver, to communicate peer-to-peer (P2P) to form a network, such as wireless local area network (WLAN). In an embodiment, the ID units may be configured as nodes of a network virtualization to form an overlay network, such as a software defined network (SDN), which would be invisible to a cyber attacker. Accordingly, a P2P, overlay, or virtual network may allow each ID unit to receive the data from the other ID units, and each ID unit may be equipped to independently execute a correlation analysis that compares its own data to corresponding data received from the other ID units. From the comparison, each ID unit may determine any anomalous readings, mismatched or unexpected values as an indication of a potential cyber attack.

In an embodiment, a combination of two or more of the correlation unit implementations described above may be deployed for the network 100.

The analysis of the time series generated by the ID units deployed at various multilevel collection points and a continuous correlation by the correlation unit(s) allow for instant association of such monitoring points (tags) and their memory representations for monitoring. For example, stream analytics or edge analytics methods may be utilized by the correlation units by tagging the ID units, and by mapping dependencies through machine learning, which can define a baseline of normal behavior for subsequent anomaly detection. The modeling module 413 of the correlation units may implement a recurrent neural network or Gaussian mixture model for the machine learning method, in which a model may be constructed to reflect correlations between process variables observed from communication data traffic. Real-time traffic during normal operations may be compared to the model to detect anomalies. Accordingly, the model may detect both single process variable anomalies as well as discoordination of different process variables. In an embodiment, the machine learning method may be implemented as automated or semi-automated. For example, an automated method of detection may detect process variable dependencies and causal relations based on a symbolic or simulated execution of extracted control logic. As another example, a semi-automatic method of detection may determine multi-variate correlations of discrete and continuous process variables and may infer transformations with or without direct analysis of control logic execution. Additional tracking may be performed relating to user activities, such as user interactions at an HMI unit 123 or an engineering workstation 121. Accordingly, OT network 100 anomalies can be used to back trace a source of the cyber attack by correlating the anomaly with network and user activities.

Correlations by the correlation units may include evaluating and comparing high level security alerts from intrusion detection systems, such as IDS/IPS components 136, with detected production process/process control anomalies and automatically determining when to output an alarm to an operator based on threshold settings. The correlation units may be configured to automatically correlate detected process anomalies with plant-level security anomalies. For example, anomalies detected by OT network 100 may be correlated with security anomalies detected by an IT security system of the office network 132.

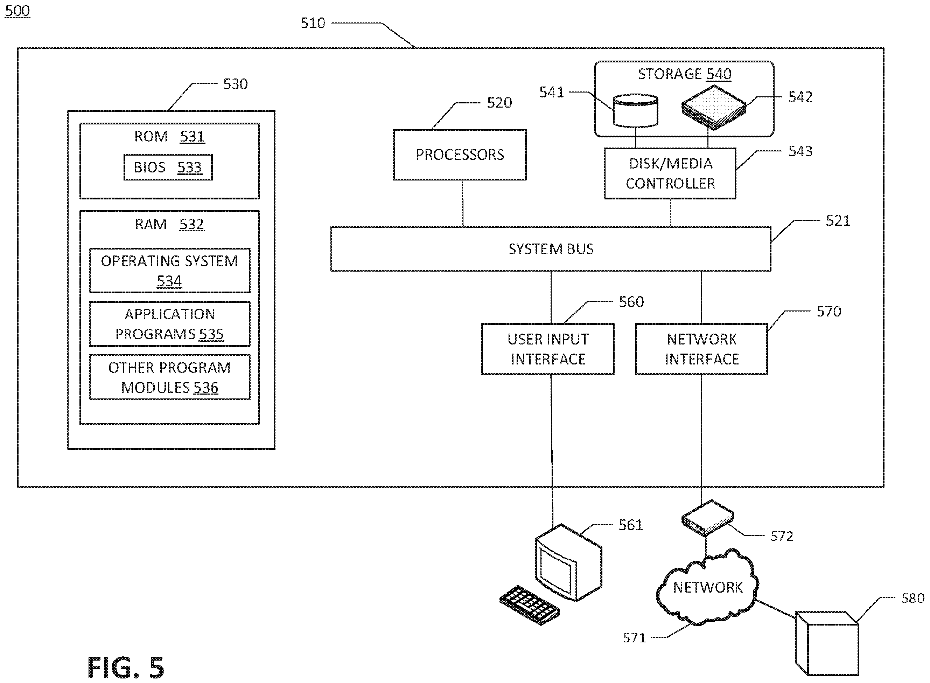

FIG. 5 illustrates an example of a computing environment within which embodiments of the present disclosure may be implemented. A computing environment 500 includes a computer system 510 that may include a communication mechanism such as a system bus 521 or other communication mechanism for communicating information within the computer system 510. The computer system 510 further includes one or more processors 520 coupled with the system bus 521 for processing the information.

The processors 520 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 520 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 521 may include at least one of a system bus, a memory bus, an address bus, or a message bus, and may permit exchange of information (e.g., data (including computer-executable code), signaling, etc.) between various components of the computer system 510. The system bus 521 may include, without limitation, a memory bus or a memory controller, a peripheral bus, an accelerated graphics port, and so forth. The system bus 521 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 5, the computer system 510 may also include a system memory 530 coupled to the system bus 521 for storing information and instructions to be executed by processors 520. The system memory 530 may include computer readable storage media in the form of volatile and/or nonvolatile memory, such as read only memory (ROM) 531 and/or random access memory (RAM) 532. The RAM 532 may include other dynamic storage device(s) (e.g., dynamic RAM, static RAM, and synchronous DRAM). The ROM 531 may include other static storage device(s) (e.g., programmable ROM, erasable PROM, and electrically erasable PROM). In addition, the system memory 530 may be used for storing temporary variables or other intermediate information during the execution of instructions by the processors 520. A basic input/output system 533 (BIOS) containing the basic routines that help to transfer information between elements within computer system 510, such as during start-up, may be stored in the ROM 531. RAM 532 may contain data and/or program modules that are immediately accessible to and/or presently being operated on by the processors 520. System memory 530 may additionally include, for example, operating system 534, application programs 535, and other program modules 536. Application programs 535 may also include a user portal for development of the application program, allowing input parameters to be entered and modified as necessary.

The operating system 534 may be loaded into the memory 530 and may provide an interface between other application software executing on the computer system 510 and hardware resources of the computer system 510. More specifically, the operating system 534 may include a set of computer-executable instructions for managing hardware resources of the computer system 510 and for providing common services to other application programs (e.g., managing memory allocation among various application programs). In certain example embodiments, the operating system 534 may control execution of one or more of the program modules depicted as being stored in the data storage 540. The operating system 534 may include any operating system now known or which may be developed in the future including, but not limited to, any server operating system, any mainframe operating system, or any other proprietary or non-proprietary operating system.

The computer system 510 may also include a disk/media controller 543 coupled to the system bus 521 to control one or more storage devices for storing information and instructions, such as a magnetic hard disk 541 and/or a removable media drive 542 (e.g., floppy disk drive, compact disc drive, tape drive, flash drive, and/or solid state drive). Storage devices 540 may be added to the computer system 510 using an appropriate device interface (e.g., a small computer system interface (SCSI), integrated device electronics (IDE), Universal Serial Bus (USB), or FireWire). Storage devices 541, 542 may be external to the computer system 510.

The computer system 510 may also include a field device interface 565 coupled to the system bus 521 to control a field device 566, such as a device used in a production line. The computer system 510 may include a user input interface or GUI 561, which may comprise one or more input devices, such as a keyboard, touchscreen, tablet and/or a pointing device, for interacting with a computer user and providing information to the processors 520.

The computer system 510 may perform a portion or all of the processing steps of embodiments of the invention in response to the processors 520 executing one or more sequences of one or more instructions contained in a memory, such as the system memory 530. Such instructions may be read into the system memory 530 from another computer readable medium of storage 540, such as the magnetic hard disk 541 or the removable media drive 542. The magnetic hard disk 541 and/or removable media drive 542 may contain one or more data stores and data files used by embodiments of the present disclosure. The data store 540 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 520 may also be employed in a multi-processing arrangement to execute the one or more sequences of instructions contained in system memory 530. In alternative embodiments, hard-wired circuitry may be used in place of or in combination with software instructions. Thus, embodiments are not limited to any specific combination of hardware circuitry and software.

As stated above, the computer system 510 may include at least one computer readable medium or memory for holding instructions programmed according to embodiments of the invention and for containing data structures, tables, records, or other data described herein. The term "computer readable medium" as used herein refers to any medium that participates in providing instructions to the processors 520 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 541 or removable media drive 542. Non-limiting examples of volatile media include dynamic memory, such as system memory 530. Non-limiting examples of transmission media include coaxial cables, copper wire, and fiber optics, including the wires that make up the system bus 521. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 500 may further include the computer system 510 operating in a networked environment using logical connections to one or more remote computers, such as remote computing device 580. The network interface 570 may enable communication, for example, with other remote devices 580 or systems and/or the storage devices 541, 542 via the network 571. Remote computing device 580 may be a personal computer (laptop or desktop), a mobile device, a server, a router, a network PC, a peer device or other common network node, and typically includes many or all of the elements described above relative to computer system 510. When used in a networking environment, computer system 510 may include modem 572 for establishing communications over a network 571, such as the Internet. Modem 572 may be connected to system bus 521 via user network interface 570, or via another appropriate mechanism.

Network 571 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 510 and other computers (e.g., remote computing device 580). The network 571 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 571.

It should be appreciated that the program modules, applications, computer-executable instructions, code, or the like depicted in FIG. 5 as being stored in the system memory 530 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 510, the remote device 580, and/or hosted on other computing device(s) accessible via one or more of the network(s) 571, may be provided to support functionality provided by the program modules, applications, or computer-executable code depicted in FIG. 5 and/or additional or alternate functionality. Further, functionality may be modularized differently such that processing described as being supported collectively by the collection of program modules depicted in FIG. 5 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 5 may be implemented, at least partially, in hardware and/or firmware across any number of devices.

It should further be appreciated that the computer system 510 may include alternate and/or additional hardware, software, or firmware components beyond those described or depicted without departing from the scope of the disclosure. More particularly, it should be appreciated that software, firmware, or hardware components depicted as forming part of the computer system 510 are merely illustrative and that some components may not be present or additional components may be provided in various embodiments. While various illustrative program modules have been depicted and described as software modules stored in system memory 530, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A computer-based method for multilevel intrusion detection in an automation and control system, the method comprising:
placing at least two intrusion detection units (160, 161) in the automation and control system at different control levels of the system, the control levels comprising a field bus control level (0) and a direct control level (1), wherein the field bus control level includes one or more field buses to which field devices are connected, wherein the direct control level includes direct controllers responsible for controlling actions of field devices and for collecting sensor and measurement information related to the field devices,
wherein one of the at least two intrusion detection units (160, 161) is placed at the field bus control level (0) and another one of the at least two intrusion detection units (160, 161) is placed at the direct control level (1);
collecting, by the at least two intrusion detection units (160, 161), control data associated with a field device (102, 104, 106) of the automation and control system;
translating, by the one of the at least two intrusion detection units (160), which is placed at the field bus control level (0), the field device control data it collects, from a serial protocol to a communication protocol used by higher control levels;
correlating the control data collected and translated by the one of at least two intrusion detection unit (160), which is placed at the field bus control level (0), with the control data collected by the other one of the at least intrusion detection units (161), which is placed at the direct control level (1);
detecting an anomaly based on the correlation; and
identifying the anomaly as an intrusion detection.

2. The method of claim 1, wherein the control levels further comprise a production scheduling control level (4), and a production control level (3).

3. The method of claim 1, wherein the collecting comprises tracking of origins and destinations of network data packets at a higher control level; and
wherein the detecting an anomaly comprises detection of a signature or unexpected behavior by network devices.

4. The method of claim 1, wherein the collecting is host-based and implemented by an agent having function blocks, and the detecting an anomaly further comprises:
detecting sensor measurements that exceed limits of physical variables of the production process;
detecting a rapid change in process variables that exceeds a threshold for rate of change; or
detecting changes to correlated process variables that exceed a threshold.

5. The method of claim 1, wherein the collecting further comprises:
observing network data packets (301- 308) over multiple scans (0-5); and
identifying a data block of interest within the data packets (301- 308) based on detecting the data block as having an expected value over a number of consecutive scans.

6. The method of claim 1, wherein the correlating is implemented by a cloud-based server, the method further comprising:
collecting control data from intrusion detectors deployed at multiple control levels at other plants of a common fleet;
detecting an anomaly based on a fleet-based correlation of control data.

7. The method of claim 1, further comprising:
detecting a signature-based anomaly based on signatures of a network device;
correlating the signature-based anomaly to the detected anomaly for adding level of confidence to the anomaly detection.

8. A system for multilevel intrusion detection in an automation and control system, comprising:
a plurality of intrusion detectors (160, 161), wherein at least two of the intrusion detectors (160, 161) are placed at different control levels of the automation and control system, the control levels comprising a field bus control level (0) and a direct control level (1), wherein the field bus control level includes one or more field buses to which field devices are connected, wherein the direct control level includes direct controllers responsible for controlling actions of field devices and for collecting sensor and measurement information related to the field devices, wherein one of the at least two intrusion detectors (160, 161) is placed at the field bus control level (0) and another one of the at least two intrusion detectors (160, 161) is placed at the direct control level (1);
wherein each intrusion detector (160, 161) comprises an agent configured to collect control data associated with a field device of the automation and control system, wherein the one of the at least two intrusion detectors (160, 161), which is placed at the field bus control level (0), is configured to translate field device control data it collects, from a serial protocol to a communication protocol used by higher control levels; and
at least one correlation unit (401) configured to:
correlate the field device control data collected and translated by the one of the at least two intrusion detectors (160, 161), which is placed at the field bus control level, with the control data collected by the other of the at least two intrusion detectors (161), which is placed at the direct control level;
detect an anomaly based on the correlation; and
identify the anomaly as an intrusion detection.

9. The system of claim 8, wherein each intrusion detector (160, 161) comprises:
a communication device for transmitting collected control data to other intrusion detectors and receiving control data from other intrusion detectors; and
the at least one correlation unit.

10. The system of claim 8, further comprising:
a network server (133) comprising the at least one correlation unit; and
a fieldbus, wherein at least one intrusion detector is coupled to the fieldbus.

11. The system of claim 8, wherein the at least one correlation unit (401) comprises:
a modeling module (413) configured to generate a machine learning model of predicted process variables; and
a comparison module (415) configured to compare real-time control data to the model to detect the anomaly.

12. The system of claim of claim 8, wherein the at least one correlation unit (401) comprises:
a historical module (417) configured to execute a time stamped compilation of anomalies discovered by the correlations,
wherein the system further comprises a user terminal display device (123) configured to display a timeline of the anomalies.

13. The system of claim 10, wherein the plurality of intrusion detectors (160, 161) is distributed as an overlay network.

14. The system of claim 8, further comprising:
a cloud-based server comprising the at least one correlation unit (401), and the at least one correlation unit (401) comprises:
a data mapping module (411) configured to map data from intrusion detectors deployed at multiple control levels at other plants of a common fleet; and
a comparison module (415) configured to detect an anomaly based on a fleet-based correlation of control data.

15. The system of claim 8, further comprising:
a network-based intrusion detection device configured to detect a signature-based anomaly based on signatures of a network device;
wherein the correlation unit (401) is configured to correlate the signature-based anomaly to the detected anomaly for adding level of confidence to the anomaly detection.

## Patentansprüche

1. Computerbasiertes Verfahren zur mehrstufigen Eindringdetektion in einem Automations- und Steuersystem, wobei das Verfahren umfasst:
Platzieren mindestens zweier Eindringdetektionseinheiten (160, 161) in dem Automations- und Steuersystem auf verschiedenen Steuerstufen des Systems, wobei die Steuerstufen eine Feldbus-Steuerstufe (0) und eine Direktsteuerstufe (1) umfassen,
wobei die Feldbus-Steuerstufe einen oder mehrere Feldbusse enthält, mit denen Feldeinrichtungen verbunden sind, wobei die Direktsteuerstufe Direktcontroller enthält, die für das Steuern von Aktionen von Feldeinrichtungen und für das Sammeln von Sensor- und Messinformationen bezüglich der Feldeinrichtungen verantwortlich sind,
wobei eine der mindestens zwei Eindringdetektionseinheiten (160, 161) auf der Feldbus-Steuerstufe (0) platziert ist und eine andere der mindestens zwei Eindringdetektionseinheiten (160, 161) auf der Direktsteuerstufe (1) platziert ist;
Sammeln, durch die mindestens zwei Eindringdetektionseinheiten (160, 161), von Steuerdaten, die mit einer Feldeinrichtung (102, 104, 106) des Automations- und Steuersystems assoziiert sind;
Übersetzen, durch die eine der mindestens zwei Eindringdetektionseinheiten (160), die auf der Feldbus-Steuerstufe (0) platziert ist, der Feldeinrichtungs-Steuerdaten, die sie sammelt, von einem seriellen Protokoll zu einem durch höhere Steuerstufen verwendeten Kommunikationsprotokoll;
Korrelieren der durch die eine der mindestens zwei Eindringdetektionseinheiten (160), die auf der Feldbus-Steuerstufe (0) platziert ist, gesammelten und übersetzten Steuerdaten mit den durch die andere der mindestens zwei Eindringdetektionseinheiten (161), die auf der Direktsteuerstufe (1) platziert ist, gesammelten Steuerdaten;
Detektieren einer Anomalie auf Basis der Korrelation; und
Identifizieren der Anomalie als eine Eindringdetektion.

2. Verfahren nach Anspruch 1, wobei die Steuerstufen weiter eine Produktionsplanungs-Steuerstufe (4) und eine Produktionssteuerstufe (3) umfassen.

3. Verfahren nach Anspruch 1, wobei das Sammeln das Verfolgen von Ursprüngen und Zielen von Netzwerkdatenpaketen auf einer höheren Steuerstufe umfasst; und
wobei das Detektieren einer Anomalie eine Detektion einer Signatur oder eines unerwarteten Verhaltens durch Netzwerkeinrichtungen umfasst.

4. Verfahren nach Anspruch 1, wobei das Sammeln Host-basiert ist und durch einen Agenten mit Funktionsblöcken implementiert wird und das Detektieren einer Anomalie weiter umfasst:
Detektieren von Sensormessungen, die Grenzen von physikalischen Variablen des Produktionsprozesses übersteigen;
Detektieren einer schnellen Änderung bei Prozessvariablen, die einen Schwellwert für eine Änderungsrate übersteigt; oder
Detektieren von Änderungen an korrelierten Prozessvariablen, die einen Schwellwert übersteigen.

5. Verfahren nach Anspruch 1, wobei das Sammeln weiter umfasst:
Beobachten von Netzwerkdatenpaketen (301-308) über mehrere Scans (0-5); und
Identifizieren eines interessierenden Datenblocks innerhalb der Datenpakete (301-308) auf Basis des Detektierens, dass der Datenblock einen erwarteten Wert über eine Anzahl von aufeinanderfolgenden Scans aufweist.

6. Verfahren nach Anspruch 1, wobei das Korrelieren durch einen Cloud-basierten Server implementiert wird, wobei das Verfahren weiter umfasst:
Sammeln von Steuerdaten von an mehreren Steuerstufen an anderen Anlagen einer gemeinsamen Flotte eingesetzten Eindringdetektoren;
Detektieren einer Anomalie auf Basis einer flottenbasierten Korrelation von Steuerdaten.

7. Verfahren nach Anspruch 1, weiter umfassend:
Detektieren einer signaturbasierten Anomalie auf Basis von Signaturen einer Netzwerkeinrichtung;
Korrelieren der signaturbasierten Anomalie zu der detektierten Anomalie für das Hinzufügen einer Konfidenzstufe zu der Anomaliedetektion.

8. System für mehrstufige Eindringdetektion in einem Automations- und Steuersystem, umfassend:
mehrere Eindringdetektoren (160, 161), wobei mindestens zwei der Eindringdetektoren (160, 161) auf verschiedenen Steuerstufen des Automations- und Steuersystems platziert sind, wobei die Steuerstufen eine Feldbus-Steuerstufe (0) und eine Direktsteuerstufe (1) umfassen, wobei die Feldbus-Steuerstufe einen oder mehrere Feldbusse, mit denen Feldeinrichtungen verbunden sind, aufweist, wobei die Direktsteuerstufe Direktcontroller enthält, die für das Steuern von Handlungen von Feldeinrichtungen und das Sammeln von Sensor- und Messinformationen bezüglich Feldeinrichtungen verantwortlich sind, wobei einer der mindestens zwei Eindringdetektoren (160, 161) auf der Feldbus-Steuerstufe (0) platziert ist und ein anderer der mindestens zwei Eindringdetektoren (160, 161) auf der Direktsteuerstufe (1) platziert ist;
wobei jeder Eindringdetektor (160, 161) einen Agenten umfasst, der ausgelegt ist zum Sammeln von mit einer Feldeinrichtung des Automations- und Steuersystems assoziierten Steuerdaten, wobei der eine der mindestens zwei Eindringdetektoren (160, 161), der auf der Feldbus-Steuerstufe (0) platziert ist, ausgelegt ist zum Übersetzen von Feldeinrichtungs-Steuerdaten, die er sammelt, von einem seriellen Protokoll zu einem durch höhere Steuerstufen verwendeten Kommunikationsprotokoll; und
mindestens eine Korrelationseinheit (401), die ausgelegt ist zum:
Korrelieren der durch den einen der mindestens zwei Eindringdetektoren (160, 161), der auf der Feldbus-Steuerstufe platziert ist, gesammelten und übersetzten Feldeinrichtung-Steuerdaten mit den durch den anderen der mindestens zwei Eindringdetektoren (161), der auf der Direktsteuerstufe platziert ist, gesammelten Steuerdaten;
Detektieren einer Anomalie auf Basis der Korrelation; und
Identifizieren der Anomalie als eine Eindringdetektion.

9. System nach Anspruch 8, wobei jeder Eindringdetektor (160, 161) umfasst:
eine Kommunikationseinrichtung zum Übertragen gesammelter Steuerdaten zu anderen Eindringdetektoren und Empfangen von Steuerdaten von anderen Eindringdetektoren; und
die mindestens eine Korrelationseinheit.

10. System nach Anspruch 8, weiter umfassend:
einen Netzwerkserver (133), umfassend die mindestens eine Korrelationseinheit; und
einen Feldbus, wobei mindestens ein Eindringdetektor an den Feldbus gekoppelt ist.

11. System nach Anspruch 8, wobei die mindestens eine Korrelationseinheit (401) umfasst:
ein Modellierungsmodul (413), das ausgelegt ist zum Erzeugen eines Maschinenlernmodells von vorhergesagten Prozessvariablen; und
ein Vergleichsmodul (415), das ausgelegt ist zum Vergleichen von Echtzeit-Steuerdaten mit dem Modell, um die Anomalie zu detektieren.

12. System nach Anspruch 8, wobei die mindestens eine Korrelationseinheit (401) umfasst:
ein historisches Modul (417), das ausgelegt ist zum Ausführen einer zeitgestempelten Zusammenstellung von durch die Korrelationen entdeckten Anomalien,
wobei das System weiter eine Nutzerterminal-Displayeinrichtung (123) umfasst, die ausgelegt ist zum Anzeigen einer Zeitlinie der Anomalien.

13. System nach Anspruch 10, wobei die mehreren Eindringdetektoren (160, 161) als ein Overlay-Netzwerk verteilt sind.

14. System nach Anspruch 8, weiter umfassend:
einen Cloud-basierten Server umfassend die mindestens eine Korrelationseinheit (401), und
die mindestens eine Korrelationseinheit (401) umfasst:
ein Datenabbildungsmodul (411), das ausgelegt ist zum Abbilden von Daten von auf mehreren Steuerstufen an anderen Anlagen einer gemeinsamen Flotte eingesetzten Eindringdetektoren; und
ein Vergleichsmodul (415), das ausgelegt ist zum Detektieren einer Anomalie auf Basis einer flottenbasierten Korrelation von Steuerdaten.

15. System nach Anspruch 8, weiter umfassend:
eine Netzwerk-basierte Eindringdetektionseinrichtung, die ausgelegt ist zum Detektieren einer signaturbasierten Anomalie auf Basis von Signaturen einer Netzwerkeinrichtung;
wobei die Korrelationseinheit (401) ausgelegt ist zum Korrelieren der signaturbasierten Anomalie mit der detektierten Anomalie zum Hinzufügen einer Konfidenzstufe zu der Anomaliedetektion.

## Revendications

1. Procédé informatique concernant une détection d'intrusion à niveaux multiples dans un système d'automatisation de commande, le procédé comprenant :
le placement d'au moins deux unités de détection d'intrusion (160, 161) dans le système d'automatisation de commande à différents niveaux de commande du système, les niveaux de commande comprenant un niveau de commande de bus de terrain (0) et un niveau de commande direct (1),
dans lequel le système de commande de bus de terrain inclut un ou plusieurs bus de terrain sur lesquels sont connectés des dispositifs de terrain, le niveau de commande direct incluant des contrôleurs directs responsables de la commande d'actions concernant les dispositifs de terrain et du recueil d'informations de détection et de mesure se rapportant aux dispositifs de terrain,
dans lequel l'une des deux unités de détection (160, 161) ou plus est placée au niveau de commande de bus de terrain (0) et une autre des deux unités de détection (160, 161) ou plus est placée au niveau de commande direct (1),
le recueil, par les deux unités de détection (160, 161) ou plus de données de commande associées à un dispositif de terrain (102, 104, 106) du système d'automatisation de commande,
la traduction, par l'une des deux unités de détection (160) ou plus qui est placée au niveau de commande de bus de terrain (0) des données de commande de dispositifs de terrain qu'elle recueille à partir d'un protocole série vers un protocole de communication utilisé par des niveaux de commande supérieurs,
la corrélation des données de commande recueillies et traduites par la première des deux unités de détection (160) ou plus, qui est placée au niveau de commande de bus de terrain (0), avec les données de commande recueillie par l'autre des deux unités de détection (161) ou plus qui est placée au niveau de commande direct (1),
la détection d'une anomalie fondée sur la corrélation, et
l'identification de l'anomalie sous forme d'une détection d'intrusion.

2. Procédé selon la revendication 1, dans lequel les niveaux de commande comprennent en outre un niveau de commande de programmation de fabrication (4) et un niveau de commande de fabrication (3).

3. Procédé selon la revendication 1, dans lequel le recueil comprend le suivi des origines et des destinations de paquets de données de réseau à un niveau de commande supérieur, et
dans lequel la détection d'une anomalie comprend la détection d'une signature ou d'un comportement inattendu par des dispositifs en réseau.

4. Procédé selon la revendication 1, dans lequel le recueil est fondé sur un ordinateur hôte et mis en œuvre par un agent comportant des blocs fonctionnels, et la détection d'une anomalie comprend en outre :
la détection de mesures de capteurs qui dépassent des limites de variables physiques du processus de fabrication,
la détection d'un changement rapide dans des variables du processus qui dépassent un seuil concernant un taux de modification, ou
la détection de changements sur des variables corrélées de processus qui dépassent un seuil.

5. Procédé selon la revendication 1, dans lequel le recueil comprend en outre :
l'observation de paquets de données de réseau (301 à 308) sur de multiples balayages (0 à 5), et
l'identification d'un bloc de données d'intérêt dans les paquets de données (301 à 308) sur la base de la détection du bloc de données comme présentant une valeur attendue sur un certain nombre de balayages consécutifs.

6. Procédé selon la revendication 1, dans lequel la corrélation est mise en œuvre par un serveur fondé sur l'informatique en nuage, le procédé comprenant en outre :
le recueil de données de commande provenant de détecteurs d'intrusion déployés à de multiples niveaux de commande au niveau d'autres installations d'un parc commun,
la détection d'une anomalie fondée sur une corrélation de données de commande fondée sur le parc.

7. Procédé selon la revendication 1, comprenant en outre :
la détection d'une anomalie fondée sur des signatures d'un dispositif en réseau,
la corrélation de l'anomalie fondée sur des signatures avec l'anomalie détectée afin d'ajouter un niveau de confiance à la détection d'anomalie.

8. Système concernant une détection d'intrusion à niveaux multiples dans un système d'automatisation de commande, comprenant :
une pluralité de détecteurs d'intrusion (160, 161), au moins deux des détecteurs d'intrusion (160, 161) étant placés à différents niveaux de commande du système d'automatisation et de commande, les niveaux de commande comprenant un niveau de commande de bus de terrain (0) et un niveau de commande direct (1), le niveau de commande de bus de terrain incluant un ou plusieurs bus de terrain sur lesquels sont connectés des dispositifs de terrain, le niveau de commande direct incluant des contrôleurs directs responsables de la commande d'actions de dispositifs de terrain et du recueil d'informations de détection et de mesure se rapportant aux dispositifs de terrain, où l'un des deux détecteurs d'intrusion (160, 161) ou plus est placé au niveau de commande de bus de terrain (0) et un autre des deux détecteurs d'intrusion (160, 161) ou plus est placé au niveau de commande direct (1),
dans lequel chaque détecteur d'intrusion (160, 161) comprend un agent configuré pour recueillir des données de commande associées à un dispositif de terrain du système d'automatisation et de commande, le premier des deux détecteurs d'intrusion (160, 161) ou plus, qui est placé au niveau de commande de bus de terrain (0), est configuré pour traduire les données de commande de dispositifs de terrain qu'il recueille à partir d'un protocole série vers un protocole de communication utilisé par des niveaux de commande supérieurs, et
au moins une unité de corrélation (401) configurée pour :
corréler les données de commande de dispositifs de terrain recueillies et traduites par le premier des deux détecteurs d'intrusion (160, 161) ou plus, lequel est placé au niveau de commande de bus de terrain, avec les données de commande recueillies par l'autre des deux détecteurs d'intrusion (161) ou plus qui est placé au niveau de commande direct,
détecter une anomalie sur la base de la corrélation, et
identifier l'anomalie sous forme d'une détection d'intrusion.

9. Système selon la revendication 8, dans lequel chaque détecteur d'intrusion (160, 161) comprend :
un dispositif de communication destinée à transmettre des données de commande recueillies vers d'autres détecteurs d'intrusion et destinée à recevoir des données de commande en provenance d'autres détecteurs d'intrusion, et
la ou les unités de corrélation.

10. Système selon la revendication 8, comprenant en outre :
un serveur de réseau (133) comprenant la ou les unités de corrélation, et
un bus de terrain, au moins un détecteur d'intrusion étant couplé au bus de terrain.

11. Système selon la revendication 8, dans lequel la ou les unités de corrélation (401) comprennent :
un module de modélisation (413) configuré pour générer un modèle d'apprentissage par machine de variables de traitement prédites, et
un module de comparaison (415) configuré pour comparer des données de commande en temps réel au modèle afin de détecter l'anomalie.

12. Système selon la revendication 8, dans lequel la ou les unités de corrélation (401) comprennent :
un module d'historique (417) configuré pour exécuter une compilation horodatée d'anomalie découverte par les corrélations,
dans lequel le système comprend en outre un dispositif d'affichage de terminal utilisateur (123) configuré pour afficher une chronologie des anomalies.

13. Système selon la revendication 10, dans lequel la pluralité de détecteurs d'intrusion (160, 161) est répartie sous forme d'un réseau de recouvrement.

14. Système selon la revendication 8, comprenant en outre :
un serveur fondé sur l'informatique en nuage comprenant la ou les unités de corrélation (401), et la ou les unités de corrélation (401) comprennent :
un module de mappage de données (411) configuré pour mapper des données provenant de détecteurs d'intrusion déployés à de multiples niveaux de commande au niveau d'autres installations d'un parc commun, et
un module de comparaison (415) configuré pour détecter une anomalie sur la base d'une comparaison de données de commande fondées sur le parc.

15. Système selon la revendication 8, comprenant en outre :
un dispositif de détection d'intrusion à base de réseau configuré pour détecter une anomalie fondée sur des signatures d'un dispositif en réseau,
dans lequel l'unité de corrélation (401) est configurée pour corréler l'anomalie fondée sur des signatures à l'anomalie détectée afin d'ajouter un niveau de confiance à la détection d'anomalie.
